# EUROPÄISCHE PATENTSCHRIFT

(11) **EP 0 804 349 B1**
(45) Veröffentlichungstag und Bekanntmachung des Hinweises auf die Patenterteilung: **13.10.1999**
(21) Anmeldenummer: 96938845.3
(22) Anmeldetag: 21.11.1996
(51) Int. Cl.: B60K 15/05

(54) **VERSCHLUSSVORRICHTUNG FÜR EINEN FAHRZEUGTANK-EINFÜLLSTUTZEN**
CLOSURE DEVICE FOR A VEHICLE TANK FILLER PIPE
DISPOSITIF DE FERMETURE DU TUYAU DE REMPLISSAGE DU RESERVOIR D'UN VEHICULE

(30) Priorität: 21.11.1995 AT 189695; 26.08.1996 AT 152096
(43) Veröffentlichungstag der Anmeldung: 05.11.1997
(73) Patentinhaber: BLAU International Gesellschaft m.b.H., 8160 Preding (AT)
(72) Erfinder: PALVÖLGYI, Sandor, A-8200 Gleisdorf (AT)
(74) Vertreter: Weiser, Andreas, Dip.-Ing.
(86) Internationale Anmeldenummer: AT9600233
(87) Internationale Veröffentlichungsnummer: WO9718968

(56) Entgegenhaltungen:
- EP-A- 0 342 679
- FR-A- 2 538 785

## Beschreibung

Die vorliegende Erfindung betrifft eine Verschlußvorrichtung für einen Fahrzeugtank-Einfüllstutzen, der ein mit einer Betätigungseinrichtung versehenes Absperrventil aufweist und in einem zurückgesetzten, mittels einer Karosserieklappe abdeckbaren Bereich der Fahrzeugkarosserie mündet, wobei die Karosserieklappe eine Antriebseinrichtung aufweist, welche von der Betätigungseinrichtung gesteuert ist.

Eine derartige Verschlußvorrichtung ist aus der EP 0 342 679 bekannt, welche eine in beiden Richtungen wirkende mechanische Kupplung zwischen Absperrventil und Karosserieklappe zeigt, d.h. es ist möglich, sowohl die Karosserieklappenbewegung durch ein Betätigen des Ventiles z.B. vom Fahrzeuginneren aus zu steuern, als auch die Ventilbetätigung durch ein Bewegen der Karosserieklappe zu steuern. Im Falle eines Crashs ist diese Wirkungsweise sehr gefährlich. Die bei einem Crash auftretenden Verzögerungs- und Schubkräfte können ein unbeabsichtigtes Öffnen der Karosserieklappe hervorrufen, wodurch auch das Einfüllstutzenventil geöffnet wird, so daß leicht entzündlicher Kraftstoff austreten kann.

Die Erfindung setzt sich zum Ziel, eine Verschlußvorrichtung der einleitend genannten Art zu schaffen, die eine erhöhte Crashsicherheit bietet. Dieses Ziel wird gemäß der Erfindung dadurch erreicht, daß die Antriebseinrichtung der Karosserieklappe in der Schließstellung des Absperrventiles verriegelt ist und von der Betätigungseinrichtung des Absperrventiles entriegelbar ist.

Die erfindungsgemäße Verschlußvorrichtung stellt keinerlei Sicherheitsrisiko im Falle eines Crashs dar. Der Ansteuerweg von der Karosserieklappe zum Absperrventil ist in dessen Schließstellung unterbunden, so daß ein unbeabsichtigtes Öffnen des Absperrventiles durch äußere Einwirkungen auf die Karosserieklappe ausgeschlossen ist.

Eine bevorzugte Ausführungsform der Erfindung zeichnet sich dadurch aus, daß die Betätigungseinrichtung mittels eines in Reichweite des Fahrersitzes angeordneten Schalters oder einer Fernbedienung steuerbar ist, was für den Benützer eine angenehme Verbesserung des Bedienungskomforts darstellt.

Bevorzugt ist die Antriebseinrichtung ein Servomotor, der elektrisch, hydraulisch oder pneumatisch von der Betätigungseinrichtung angesteuert ist. Dies vereinfacht die Ansteuerung durch die Betätigungseinrichtung, erfordert jedoch einen höheren Aufwand auf Seite der Antriebseinrichtung.

Eine fertigungstechnisch besonders kostengünstige Alternative besteht darin, daß die Antriebseinrichtung ein Getriebe ist, welches mechanisch mit der Betätigungseinrichtung gekuppelt ist, wobei die Betätigungseinrichtung in der Schließstellung des Absperrventiles verriegelt ist. Durch die mechanische Kupplung wird das Absperrventil bei einem manuellen Schließen der Karosserieklappe geschlossen, wogegen die Verriegelung im Schließzustand ein manuelles Öffnen verhindert. Die Verriegelung der Betätigungseinrichtung in der Ruhestellung gewährleistet hier die Unidirektionalität des Ansteuerweges von der Betätigungseinrichtung zur Antriebseinrichtung.

Bei der letztgenannten Ausführungsform ist es zur weiteren Erhöhung der Crashsicherheit besonders günstig, wenn das Getriebe eine Sollbruchstelle, eine bei einer übermäßigen Beanspruchung auslösende Verbindung od.dgl. aufweist. Eine besonders bevorzugte Konstruktion zeichnet sich dadurch aus, daß die Verbindung einerseits eine Schubführung und anderseits einen darin geführten Gleitkopf umfaßt, wobei zumindest einer der Teile Schubführung und Gleitkopf mit einer Zahnung versehen ist, in welche der andere Teil mit einem entsprechenden Vorsprung eingreift, wobei die Zahnung und/oder der Vorsprung flexibel, vorzugsweise elastisch gelagert ist. Bevorzugt schließt dabei an zumindest ein Ende der Schubführung eine den Gleitkopf aus der Schubachsenrichtung ablenkende Umlenkführung an, so daß übermäßige Kräfte in Schubachsenrichtung am Ende der Schubführung zu einem Auftrennen der Verbindung führen.

In jedem Fall können der Komfort und die Sicherheit der Verschlußvorrichtung noch erhöht werden, wenn gemäß einem weiteren Merkmal der Erfindung die Betätigungseinrichtung für das Schließen des Absperrventiles vom Zündschaltkreis des Fahrzeuges steuerbar ist, wobei das Einschalten des Zündschaltkreises das Schließen des Absperrventiles und damit der Karosserieklappe veranlaßt. Auf diese Weise kann gewährleistet werden, daß das Absperrventil und die von diesem gesteuerte Karosserieklappe stets geschlossen sind, wenn das Fahrzeug in Betrieb genommen wird. Darüber hinaus bietet diese Lösung erhöhten Komfort für den Fahrer, weil sich ein Schließen bzw. Überprüfen des Schließzustandes der Verschlußvorrichtung erübrigt.

Die Erfindung wird nachstehend an Hand eines in den Zeichnungen dargestellten Ausführungsbeispieles näher erläutert. In den Zeichnungen zeigen die
Fig. 1 und 2 einen schematischen Längsschnitt durch die Verschlußvorrichtung auf Höhe des Absperrventiles in zwei verschiedenen Betriebsstellungen,
Fig. 3 einen schematischen Längsschnitt durch die Verschlußvorrichtung auf Höhe der Antriebseinrichtung entsprechend der Betriebsstellung von Fig. 2 und
Fig. 4 ein Blockschaltbild der Vorrichtung.

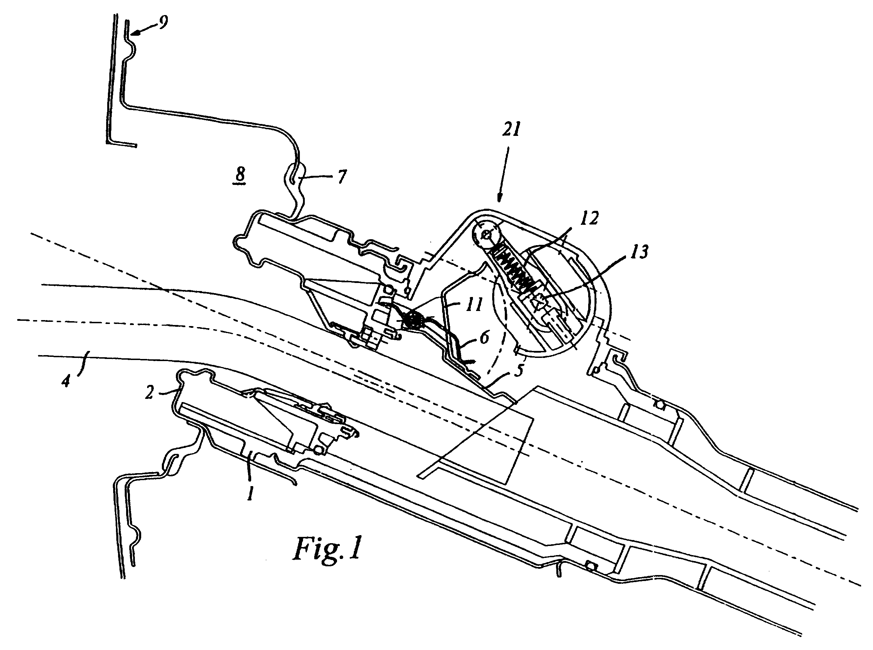

In den Fig. 1 bis 4 ist das obere Ende eines Einfüllstutzens 1 gezeigt, dessen (nicht dargestelltes) unteres Ende zu einem Fahrzeug-Kraftstofftank führt. In das obere Ende des Einfüllstutzens 1 ist ein etwa topfförmiger Einsatz 2 dicht eingesetzt, welcher an seinem unteren Ende eine Öffnung 3 verringerten Durchmessers für den Durchtritt des Füllrohres 4 einer (nicht weiter dargestellten) Zapfpistole aufweist. Die Öffnung 3 ist mit Hilfe einer einseitig angelenkten Klappe 5 verschließbar, welche durch eine Feder 6 gegen den unterseitigen Rand der Öffnung vorgespannt ist.

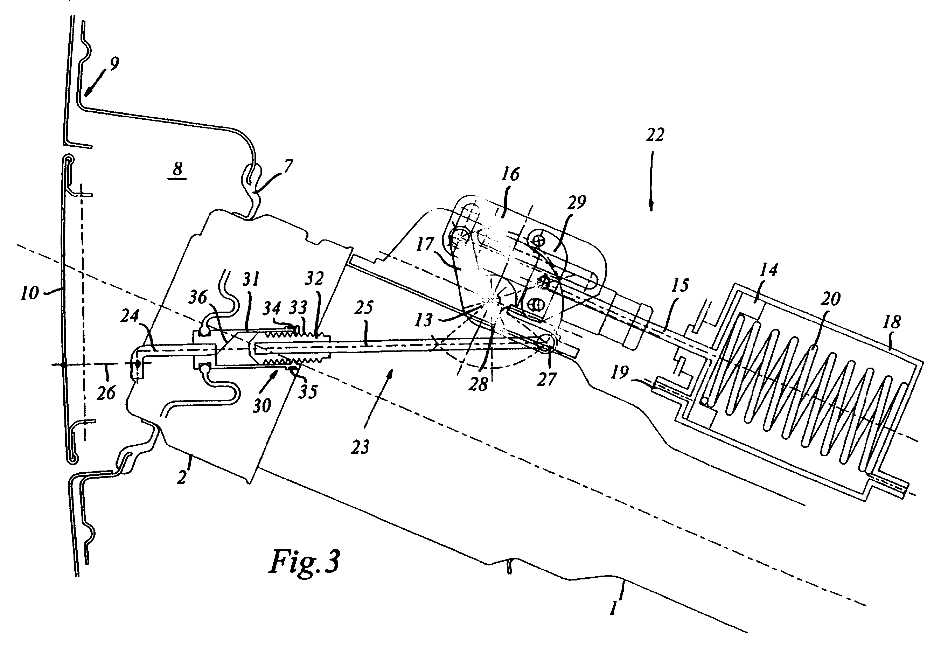

Das obere Ende des Einfüllstutzens 1 mitsamt dem Einsatz 2 durchsetzt unter Zwischenschaltung einer Dichtmanschette 7 eine Öffnung in einem zurückgesetzten Bereich 8 einer Fahrzeugkarosserie 9. Der zurückgesetzte Bereich 8 ist durch eine an der Fahrzeugkarosserie 9 angelenkte Karosserieklappe 10 abgedeckt (Fig. 3).

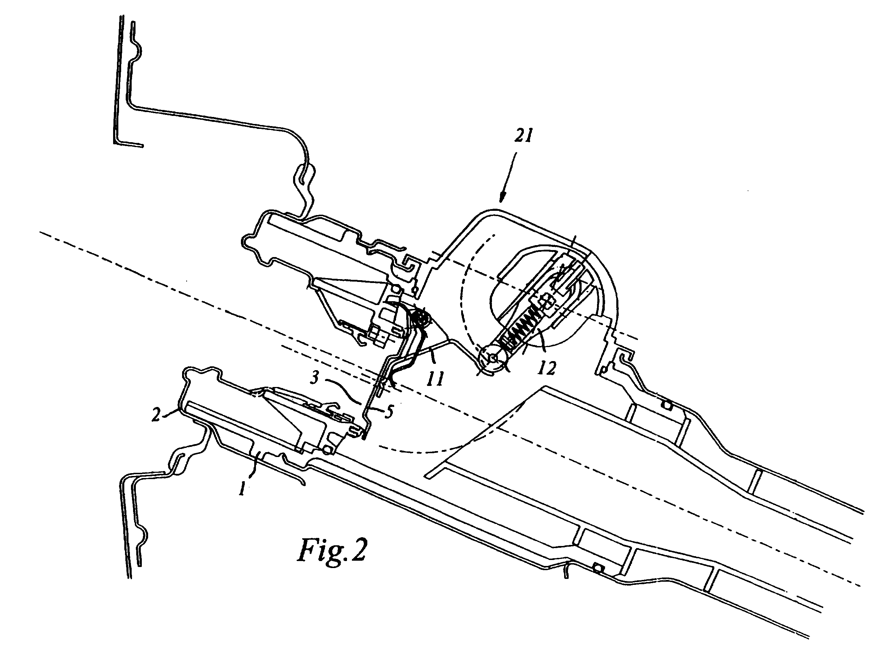

Zum dichten Verschließen der Öffnung 3 im Fahrbetrieb ist neben der Klappe 5 ein Anpreßfinger 11 angelenkt, welcher mit Hilfe eines verschwenkbaren, an seinem Ende mit einer federbelasteten Andruckrolle versehenen Nockens 12 gegen die Unterseite der Klappe 5 beaufschlagbar ist (Fig. 2). Das Verschwenken des Nockens 12 erfolgt über eine Welle 13, die von einem Pneumatikkolben 14 über eine Kolbenstange 15, eine daran befestigte Kulisse 16 und einen von letzterer mitgenommenen Hebel 17 angetrieben wird (Fig. 3). Der Kolben 14 ist in einem Zylinder 18 über eine Druckleitung 19 mit Druckluft beaufschlagbar und arbeitet gegen eine Druckfeder 20.

Die Öffnung 3, die Klappe 5, der Anpreßfinger 11 und der Nocken 12 bilden somit ein allgemein mit 21 bezeichnetes Absperrventil für den Einfüllstutzen 1, welches über die Welle 13 von einer allgemein mit 22 bezeichneten Betätigungseinrichtung betätigt wird, die die Elemente 14 bis 20 aufweist. Es versteht sich jedoch, daß anstelle des gezeigten Absperrventiles 21 und der gezeigten Betätigungseinrichtung 22 jede andere Art von Absperrventil oder Ventil-Betätigungseinrichtung verwendet werden kann, wie sie dem Fachmann bekannt ist.

Die Betätigungseinrichtung 22 steuert ferner die Bewegung der Karosserieklappe 10. Die Karosserieklappe 10 kann mit einem Servomotor als Antriebseinrichtung versehen sein, der beispielsweise auf elektrischem, hydraulischem oder pneumatischem Wege von der Betätigungseinrichtung 22 in der Weise angesteuert wird, daß beim Öffnen oder Schließen des Absperrventiles 21 gleichzeitig die Karosserieklappe 10 geöffnet bzw. geschlossen wird.

Eine mechanische Alternative einer allgemein mit 23 bezeichneten Antriebseinrichtung für die Karosserieklappe 10 ist in Fig. 3 dargestellt. Die Antriebseinrichtung 23 umfaßt eine zweiteilige Schubstange 24, 25, welche die Dichtmanschette 7 durchsetzt und an einem Ende an der Karosserieklappe 10 (schematisch durch die Verbindung 26 dargestellt) und am anderen Ende am Hebel 17 mittels eines Kugelgelenkes 27 angelenkt ist.

Um zu verhindern, daß ein Öffnen der Karosserieklappe 10 auf die Betätigungseinrichtung 22 rückwirkt und über diese das Absperrventil 21 öffnet, ist die Betätigungseinrichtung 22 in ihrer Ruhestellung verriegelt. In eine Rastausnehmung 28 des Hebels 17 greift eine von der Kulisse 16 mitgeführte Sperrklinke 29 ein. Die Kolbenstange 15 setzt ihrerseits an der Sperrklinke 29 an. Das Einfahren der Kolbenstange 15 löst daher zunächst die Sperrklinke 29 vom Hebel 17, und bewegt erst anschließend die Kulisse 16 und den Hebel 17. Die Sperrklinke 29 ist durch eine (nicht dargestellte) Feder in die in Fig. 3 gezeigte Verriegelungsstellung vorgespannt und rastet bei der Zurückbewegung der Kolbenstange 15 wieder in der Rastausnehmung 28 des Hebels 17 ein.

Die beiden Teile 24, 25 der Schubstange 24, 25 sind über eine bei einer übermäßigen Beanspruchung auslösende Verbindung 30 miteinander verbunden. Die Verbindung 30 setzt sich aus einer hülsenförmigen Schubführung 31 auf dem Schubstangenteil 24 und einem Gleitkopf 32 auf dem Schubstangenteil 25 zusammen. Der Gleitkopf 32 ist mit einem Außengewinde 33 und die Schubführung 31 mit einem in das Gewinde 33 eingreifenden Innenumfangsvorsprung 34 versehen. Die Schubführung 31 ist ferner an mehreren über ihren Umfang verteilten Stellen in Axialrichtung geschlitzt und von einer Spannfeder 35 umgeben. Bei einer übermäßigen Axialkraft öffnet sich die Schubführung 31 gegen die Kraft der Spannfeder 35 und der Vorsprung 34 gleitet auf der Zahnung des Gewindes 33 ab. Am Ende der Schubführung 31 ist eine Umlenkführung 36 in Form einer Abschrägung angeordnet, auf welche der Gleitkopf 32 aufläuft. Die Umlenkführung 36 lenkt den Gleitkopf 32 aus der Schubachsenrichtung ab, wodurch die Verbindung 30 aufbricht.

Alternativ oder zusätzlich zu der Verbindung 30 kann auch eine einfache Sollbruchstelle vorgesehen werden.

Anstelle des gezeigten Schubgetriebes kann jeder beliebige elektrische, pneumatische oder hydraulische Servomotor oder auch jede andere Art von mechanischem Getriebe als Antriebseinrichtung 23 für die Karosserieklappe 10 verwendet werden, solange die Unidirektionalität des Ansteuerweges von der Betätigungseinrichtung 22 zur Karosserieklappe 10 gewährleistet ist.

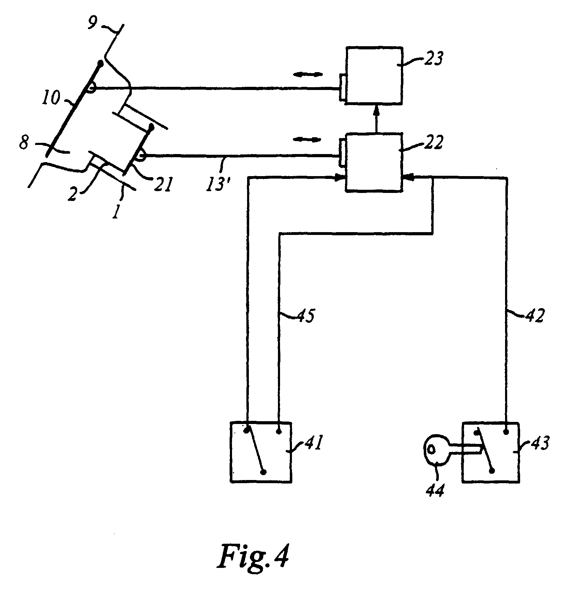

Fig. 4 zeigt das verallgemeinerte Blockschaltbild der Vorrichtung der Fig. 1-3.

Das Öffnen und Schließen des Absperrventiles 21 wird allgemein über eine mechanische Verbindung 13' von der Betätigungseinrichtung 22 veranlaßt, welche durch einen elektrischen, hydraulischen, pneumatischen Servomotor od.dgl. gebildet sein kann. Gleichzeitig mit der Betätigung des Absperrventiles 21 steuert die Betätigungseinrichtung 22 die Antriebseinrichtung 23 zur Bewegung der Karosserieklappe 10. Bei der in den Fig. 1-3 gezeigten Ausführungsform ist die Antriebseinrichtung 23 ein mechanisches Kupplungsglied, dessen beschriebene Verriegelung die Unidirektionalität des Steuerungsweges von der Betätigungseinrichtung 22 zur Antriebseinrichtung 23 gewährleistet.

Die Betätigungseinrichtung 22 ist mittels eines in Reichweite des Fahrersitzes des Fahrzeuges angeordneten Schalters 41 sowohl in Schließ- als auch Öffnungsrichtung des Absperrventiles 21 und der Karosserieklappe 10 steuerbar. Ein zusätzlicher Ansteuerungsweg 42 für die Schließrichtung ist an den Zündschaltkreis 43 des Fahrzeuges angeschlossen. Das Betätigen des Zündschlüssels 44 des Fahrzeuges bzw. eines gleichartigen Betätigungselementes veranlaßt über den Ansteuerungsweg 42 und die Betätigungseinrichtung 22 ein Schließen des Absperrventiles 21 und damit auch der Karosserieklappe 10.

Im einfachsten Fall kann vorgesehen werden, daß der Schalter 41 ausschließlich zum Öffnen der Verschlußvorrichtung dient, d.h. der Signalweg 45 kann entfallen.

## Patentansprüche

1. Verschlußvorrichtung für einen Fahrzeugtank-Einfüllstutzen, der ein mit einer Betätigungseinrichtung (22) versehenes Absperrventil (21) aufweist und in einem zurückgesetzten, mittels einer Karosserieklappe (10) abdeckbaren Bereich (8) der Fahrzeugkarosserie (9) mündet, wobei die Karosserieklappe (10) eine Antriebseinrichtung (23) aufweist, welche von der Betätigungseinrichtung (22) gesteuert ist, dadurch gekennzeichnet, daß die Antriebseinrichtung (23) der Karosserieklappe (10) in der Schließstellung des Absperrventiles (21) verriegelt ist und von der Betätigungseinrichtung (22) des Absperrventiles (21) entriegelbar ist.

2. Verschlußvorrichtung nach Anspruch 1, dadurch gekennzeichnet, daß die Betätigungseinrichtung mittels eines in Reichweite des Fahrersitzes angeordneten Schalters (41) oder einer Fernbedienung steuerbar ist.

3. Verschlußvorrichtung nach Anspruch 1 oder 2, dadurch gekennzeichnet, daß die Antriebseinrichtung (23) ein Servomotor ist, der elektrisch, hydraulisch oder pneumatisch von der Betätigungseinrichtung (22) angesteuert ist.

4. Verschlußvorrichtung nach Anspruch 1 oder 2, dadurch gekennzeichnet, daß die Antriebseinrichtung (23) ein Getriebe ist, welches mechanisch mit der Betätigungseinrichtung (22) gekuppelt ist, wobei die Betätigungseinrichtung (22) in der Schließstellung des Absperrventiles verriegelt ist.

5. Verschlußvorrichtung nach Anspruch 4, dadurch gekennzeichnet, daß das Getriebe eine Sollbruchstelle, eine bei einer übermäßigen Beanspruchung auslösende Verbindung (30) od.dgl. aufweist.

6. Verschlußvorrichtung nach Anspruch 5, dadurch gekennzeichnet, daß die Verbindung (30) einerseits eine Schubführung (31) und anderseits einen darin geführten Gleitkopf (32) umfaßt, wobei zumindest einer der Teile Schubführung und Gleitkopf mit einer Zahnung (33) versehen ist, in welche der andere Teil mit einem entsprechenden Vorsprung (34) eingreift, wobei die Zahnung (31) und/oder der Vorsprung (34) flexibel, vorzugsweise elastisch gelagert ist.

7. Verschlußvorrichtung nach Anspruch 6, dadurch gekennzeichnet, daß an zumindest ein Ende der Schubführung (31) eine den Gleitkopf (32) aus der Schubachsenrichtung ablenkende Umlenkführung (36) anschließt.

8. Verschlußvorrichtung nach einem der Ansprüche 1 bis 7, dadurch gekennzeichnet, daß die Betätigungseinrichtung für das Schließen des Absperrventiles (21) vom Zündschaltkreis (43) des Fahrzeuges steuerbar ist, wobei das Einschalten des Zündschaltkreises (43) das Schließen des Absperrventiles (21) und damit der Karosserieklappe (10) veranlaßt.

9. Vorrichtung nach Anspruch 1 oder 2, dadurch gekennzeichnet, daß die Betätigungseinrichtung (22) einen Pneumatikkolben (14) od.dgl. aufweist.

## Claims

1. Closure device for a vehicle tank filler neck which has a shut-off valve (21) provided with an actuator (22) and leads into a setback region (8) of the vehicle body (9) which can be covered with a body flap (10), wherein the body flap (10) comprises a drive mechanism (23) which is controlled by the actuator (22), characterised in that the drive mechanism (23) of the body flap (10) is locked in the closed position of the shut-off valve (21) and can be unlocked by the actuator (22) of the shut-off valve (21).

2. Closure device according to claim 1, characterised in that the actuator can be controlled by means of a switch (41) arranged within reach of the driver's seat or by a remote control.

3. Closure device according to claim 1 or 2, characterised in that the drive mechanism (23) is a servomotor which is controlled electrically, hydraulically or pneumatically by the actuator (22).

4. Closure device according to claim 1 or 2, characterised in that the drive mechanism (23) is a gear mechanism which is coupled mechanically to the actuator (22), the actuator (22) being locked in the closed position of the shut-off valve.

5. Closure device according to claim 4, characterised in that the gear mechanism has a predetermined break point, a link (30) which releases in case of excessive load or the like.

6. Closure device according to claim 5, characterised in that the link (30) includes on the one hand a sliding guide (31) and on the other hand a slide head (32) guided therein, wherein at least one of the components comprising sliding guide and slide head is provided with a tooth system (33) in which the other component engages by a corresponding projection (34), the tooth system (31) and/or the projection (34) being mounted flexibly, preferably elastically.

7. Closure device according to claim 6, characterised in that at least one end of the sliding guide (31) is adjoined by a deflection guide (36) which deflects the slide head (32) out of the direction of the sliding axis.

8. Closure device according to any of claims 1 to 7, characterised in that the actuator can be controlled by the ignition circuit (43) of the vehicle for closure of the shut-off valve (21), wherein switching on the ignition circuit (43) causes closure of the shut-off valve (21) and hence of the body flap (10).

9. Device according to claim 1 or 2, characterised in that the actuator (22) comprises a pneumatic piston (14) or the like.

## Revendications

1. Dispositif de fermeture pour un tuyau de remplissage de réservoir de véhicule qui présente une soupape de fermeture (21) munie d'un dispositif d'actionnement (22) et débouche dans une zone recouvrable en retrait (8) de la carrosserie du véhicule, zone pouvant être recouverte d'un volet de carrosserie (10), le volet de carrosserie (10) présentant un dispositif d'entraînement (23) qui est commandé par le dispositif d'actionnement (22), caractérisé en ce que le dispositif d'entraînement (23) du clapet de carrosserie (10) est verrouillé dans la position de fermeture de la soupape de fermeture (21) et peut être déverrouillé par le dispositif d'actionnement (22) de la soupape de fermeture (21).

2. Dispositif de fermeture selon la revendication 1, caractérisé en ce que le dispositif d'actionnement peut être commandé au moyen d'un commutateur (41) ou d'une télécommande disposée à l'intérieur du rayon de portée du siège du conducteur.

3. Dispositif de fermeture selon la revendication 1 ou 2, caractérisé en ce que le dispositif d'actionnement (23) est un servomoteur qui est commandé électriquement, hydrauliquement, pneumatiquement par le dispositif d'actionnement (22).

4. Dispositif de fermeture selon la revendication 1 ou 2, caractérisé en ce que le dispositif d'actionnement (23) est un réducteur qui est accouplé mécaniquement au dispositif d'actionnement (22), le dispositif d'actionnement (22) étant verrouillé dans la position de fermeture de la soupape de fermeture.

5. Dispositif de fermeture selon la revendication 4, caractérisé en ce que le réducteur présente un point de rupture nominal déclenchant une liaison (30) ou analogue lors d'une sollicitation excessive.

6. Dispositif de fermeture selon la revendication 5, caractérisé en ce que la liaison (30) comprend d'une part un guidage de poussée (31) et d'autre part une tête coulissante amenée dans celui-ci (32), de sorte qu'au moins l'un des éléments de guidage de poussée et la tête coulissante est munie d'une denture (33) dans laquelle l'autre élément coopère avec une saillie correspondante (34), de sorte que la denture (31) et/ou la saillie (34) sont logées de façon souple, de préférence de façon élastique.

7. Dispositif de fermeture selon la revendication 6, caractérisé en ce que sur au moins une extrémité du guidage de poussée (31) vient se raccorder une tête coulissante (33) du guidage de renvoi (36) s'écartant de la direction de l'axe de poussée.

8. Dispositif de fermeture selon l'une des revendications 1 à 7, caractérisé en ce que le dispositif d'actionnement pour la fermeture de la soupape de fermeture(21) peut être commandé par le circuit d'allumage (43) du véhicule de sorte que la mise en marche du circuit d'allumage (43) entraîne la fermeture de la soupape de fermeture (21) et par conséquent le volet de carrosserie (10).

9. Dispositif selon la revendication 1 ou 2, caractérisé en ce que le dispositif d'actionnement (22) présente un piston pneumatique (14) ou analogue.
